# EUROPEAN PATENT APPLICATION

(11) **EP 4 843 867 A1**
(43) Date of publication of application: **25.11.2026**
(21) Application number: 26152929.1
(22) Date of filing: 20.01.2026
(51) Int. Cl.: B62D 21/11, B60K 5/12

(54) **FRONT STRUCTURE FOR ELECTRIC VEHICLE**

(30) Priority: 20.05.2025 JP 2025084198
(71) Applicant: Suzuki Motor Corporation, Hamamatsu-shi, Shizuoka 432-8611 (JP)
(72) Inventor: YOSHIIE, Hiroyuki, Hamamatsu-shi, 432-8611 (JP)
(74) Representative: Plasseraud IP

(57) **Abstract**

[Problem to be Solved] The vibration caused by a driving unit in a vehicle front portion of an electric vehicle is reduced.

[Solution] A front structure 100 for an electric vehicle includes a suspension frame 50 that has a pair of side frames 10 and 10, a frame main body 20 that connects rear portions of the pair of side frames 10 and 10, and an arm holding portion 30, in which a plurality of motor mounts 80 supporting a driving unit M having a traveling motor is attached to the suspension frame 50, and each of the pair of side frames 10 and 10 has a front frame portion 11 that extends linearly in the vehicle front-rear direction, a rear frame portion 12 that is located on a vehicle rear side and a vehicle lower side with respect to the front frame portion 11 and extends linearly in the vehicle front-rear direction, and an inclined frame portion 13 that connects a rear end of the front frame portion 11 and a front end of the rear frame portion 12, and the plurality of motor mounts 80 have a side motor mount 81 disposed for each of the pair of side frames 10 and 10, and the side motor mount 81 is fixed on the front frame portion 11.

## Description

### [Technical Field]

The present invention relates to front structures for electric vehicles.

### [Background Art]

Patent Literature 1 discloses a sub frame (hereinafter, referred to as a suspension frame) that is disposed at a lower portion in a vehicle front portion and swingably supports a link structure member of a suspension while supporting a power unit. The suspension frame disclosed in Patent Literature 1 has a front framework portion that extends in a vehicle width direction, a rear framework portion that is spaced rearwardly with respect to the front framework portion and extends in the vehicle width direction, and left and right framework portions that extend in a vehicle front-rear direction in the left and right outer portions of the suspension frame and are spaced apart from each other in the vehicle width direction, and is formed in a substantially rectangular shape as a whole. In this suspension frame, the link structure member of the suspension is swingably supported by each of the left and right framework portions via a rubber bush, etc., and a support member supporting an engine of the power unit is fixed to each of the left and right framework portions of the suspension frame via bolts, etc. In a vehicle front structure disclosed in Patent Literature 1, the suspension frame is disposed on a lower side of a power compartment in the vehicle front portion, and the suspension frame is attached to a vehicle body via attachment pins provided at both end portions of the front framework portion and attachment holes provided at both end portions of the rear framework portion. That is, in the structure disclosed in Patent Literature 1, support points (fixed points) to the vehicle body in the suspension frame are provided at a front end and a rear end in each outer portion of the suspension frame in the vehicle width direction.

### [Citation List]

### [Patent Literature]

[Patent Literature 1] JP 2003-002229 A

### [Summary of Invention]

### [Problem to be Solved by the Invention]

In recent years, much research and development has been invested in electric vehicles in which a power unit (driving unit) having a traveling motor is disposed in a vehicle front portion. It is conceivable that the structure disclosed in Patent Literature 1 may be adopted as a front structure for an electric vehicle, so that a suspension frame is used as a frame for supporting a power unit having a traveling motor.

However, in the structure disclosed in Patent Literature 1, the support points (fixed points) to the vehicle body in the suspension frame are only set at the front end and the rear end in each outer portion of the suspension frame in the vehicle width direction, and furthermore, the support member supporting the power unit is attached to each of left and right framework portions extending substantially linearly in the vehicle front-rear direction, the left and right framework portions having no support points to the vehicle body.

Therefore, a load of the power unit which is a heavy object acts on each of the left and right framework portions via the support member, which makes it easy to cause flexure due to the load of the power unit on each of the left and right framework portions. Accordingly, when the structure of Patent Literature 1 is simply adopted as the front structure for an electric vehicle, vibration caused by the power unit (driving unit) easily occurs in the suspension frame during traveling, and there is room for improvement in terms of vibration reduction.

The present invention has been made to solve the above-described problem and an object of the invention is to provide a front structure for an electric vehicle that can reduce vibration caused by a driving unit in a vehicle front portion of the electric vehicle.

### [Means for Solving the Problem]

According to one aspect of the present invention for accomplishing the above object, a front structure for an electric vehicle is provided which includes a suspension frame that has a pair of side frames that extend in a vehicle front-rear direction in a lower portion of a vehicle front portion and are spaced apart from each other in a vehicle width direction, a frame main body that extends in the vehicle width direction to connect rear portions of the pair of side frames, and an arm holding portion that swingably holds a suspension arm, in which a plurality of motor mounts supporting a driving unit having a traveling motor are attached to the suspension frame. In the front structure for an electric vehicle, each of the pair of side frames has a front frame portion that extends linearly in the vehicle front-rear direction, a rear frame portion that is located on a vehicle rear side and a vehicle lower side with respect to the front frame portion and extends linearly in the vehicle front-rear direction, and an inclined frame portion that connects a rear end of the front frame portion and a front end of the rear frame portion, and the plurality of motor mounts have a side motor mount disposed for each of the pair of side frames, and the side motor mount is fixed on the front frame portion.

### [Advantageous Effects of Invention]

According to one aspect of the present invention, it is possible to provide a front structure for an electric vehicle that can reduce vibration caused by a driving unit in a vehicle front portion of the electric vehicle.

### [Brief Description of Drawings]

[Figure 1] Figure 1 is a schematic perspective view showing an embodiment of a front structure for an electric vehicle according to the present invention.
[Figure 2] Figure 2 is a schematic cross-sectional view of the front structure for an electric vehicle.
[Figure 3] Figure 3 is a schematic top view of the front structure for an electric vehicle.
[Figure 4] Figure 4 is a schematic top view of the front structure for an electric vehicle in which front side members are not shown.
[Figure 5] Figure 5 is an enlarged perspective view of a main portion of the front structure for an electric vehicle.
[Figure 6] Figure 6 is an enlarged perspective view of a main portion of the front structure for an electric vehicle in which suspension arms are not shown.

### [Mode for Carrying Out the Invention]

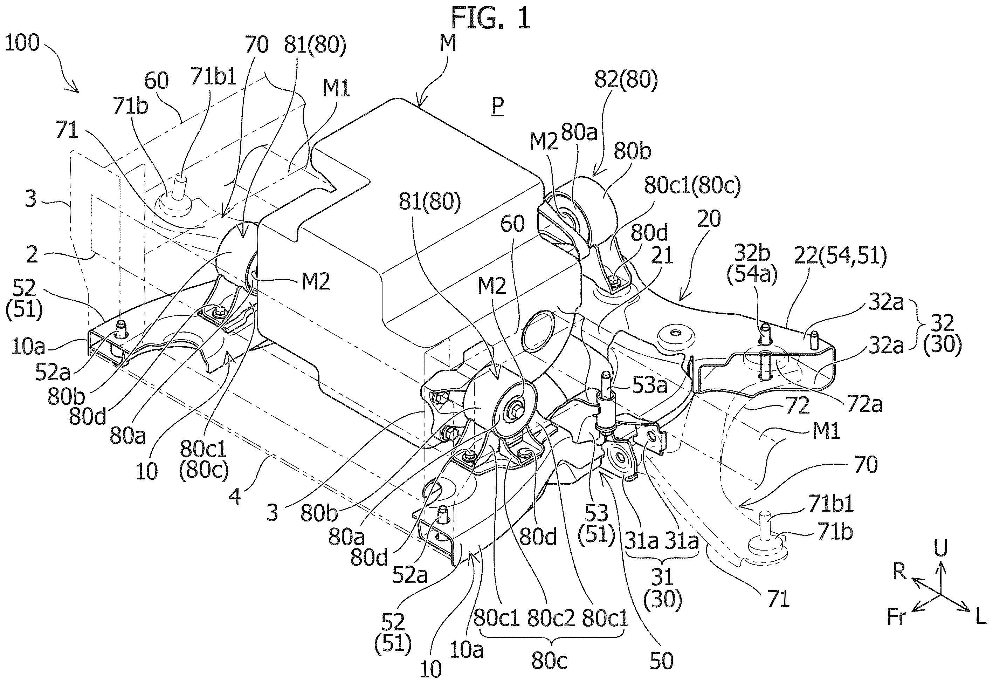

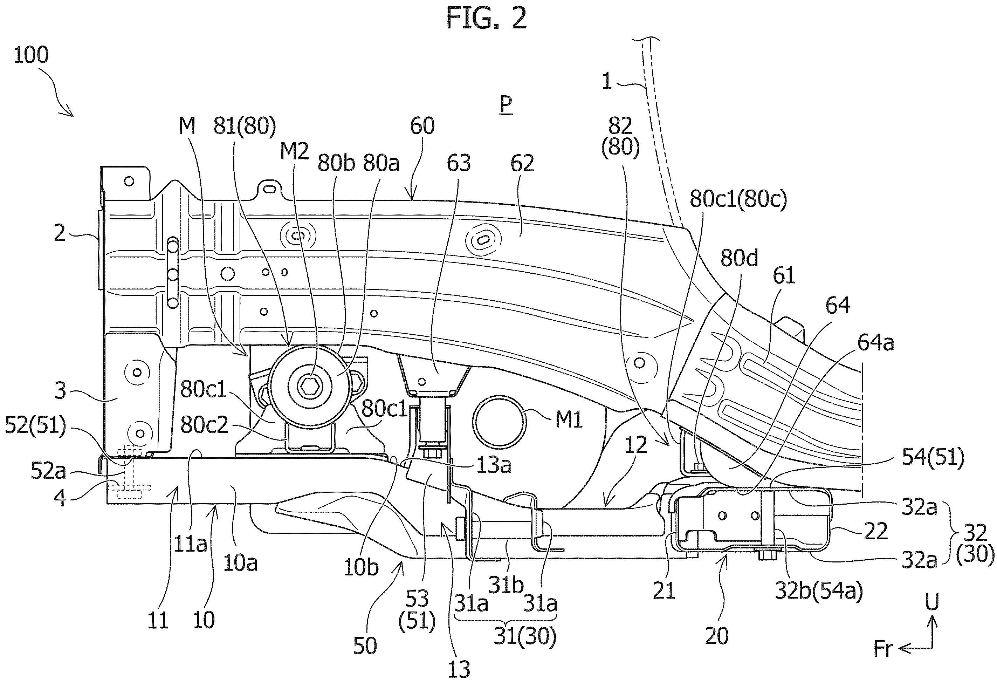

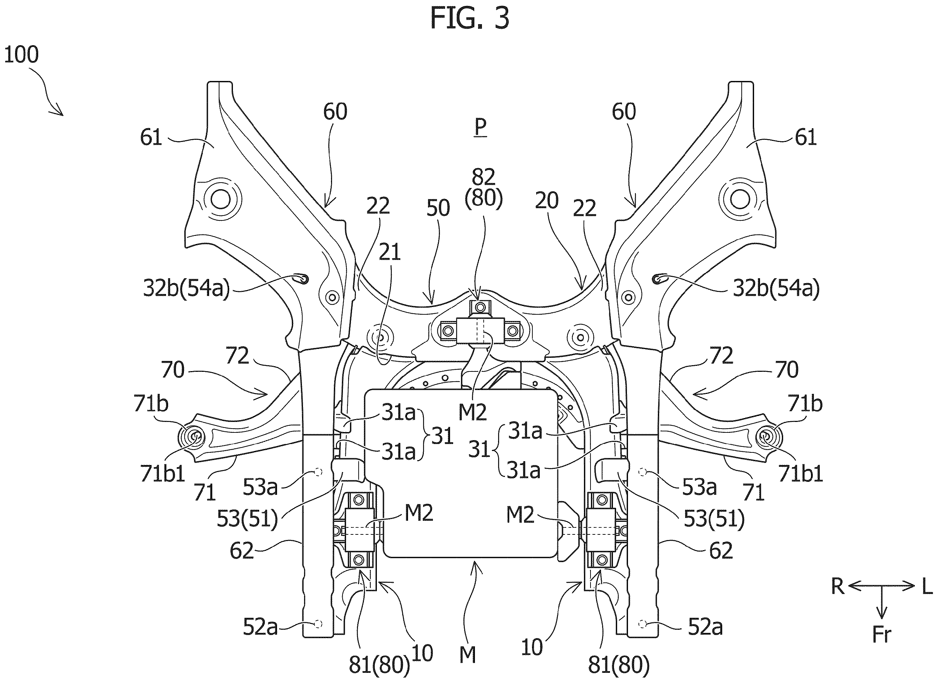

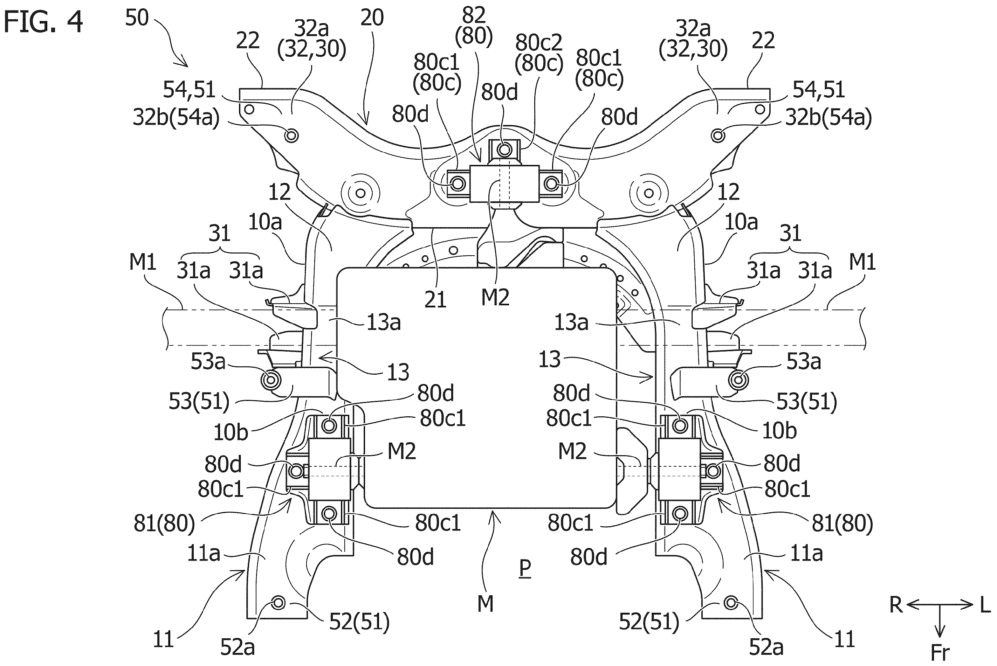

Hereinafter, embodiments of the present invention will be described in detail with reference to the accompanying drawings. Figures 1 to 4 are diagrams for illustrating a front structure 100 for an electric vehicle according to an embodiment of the present invention, Figure 1 is a schematic perspective view of the front structure 100 as viewed from the front of the vehicle and obliquely from above, Figure 2 is a schematic cross-sectional view as viewed from the left side, Figure 3 is a schematic top view as viewed from above, and Figure 4 is a schematic top view in which front side members 60, which will be described later, are not shown. Note that, in the drawings, an arrow Fr direction indicates a forward direction in a vehicle front-rear direction, an arrow U direction indicates an upward direction in a vehicle up-down direction, an arrow R direction indicates a right side in a vehicle width direction in a state in which an occupant riding in the vehicle faces the vehicle forward direction, and an arrow L direction indicates a left side in a vehicle width direction in a state in which an occupant riding in the vehicle faces the vehicle forward direction. In the following description, the terms "front" and "rear" correspond to the front and the rear in the vehicle front-rear direction, respectively, the terms "upper" and the "lower" correspond to the upper and the lower in the vehicle up-down direction, respectively, and the terms "left" and "right" correspond to the left and the right in the vehicle width direction in a state in which an occupant riding the vehicle faces in the vehicle forward direction.

The front structure 100 is applied to a front structure for an electric vehicle driven by a driving unit M including a traveling motor. The driving unit M generates power for driving front wheels to drive the front wheels. The driving unit M may be also referred to as a motor unit.

The driving unit M is disposed forward of a dash panel 1 provided in a vehicle front portion. In particular, the dash panel 1 is, for example, a panel made of a steel sheet separating a power compartment P and an occupant compartment, and substantially extends in the vehicle width direction and the vehicle up-down direction. In the power compartment P, the driving unit M or the like which is a driving device including an electric motor is disposed. The power compartment P is also referred to as a power unit compartment, and is formed from mainly the dash panel 1, a front bumper (not shown), and a front hood (not shown) extending from an upper end portion of the dash panel 1 to an upper end portion of the front bumper.

With reference to Figures 1 to 4, the front structure 100 for an electric vehicle includes a suspension frame 50, and a pair of front side members 60 and 60. The suspension frame 50 is supported by the front side members 60.

The suspension frame 50 is a frame for supporting a front suspension, and is a highly rigid member. The suspension frame 50 is formed, as one frame component, by, for example, joining a plurality of steel-sheet members subjected to press working or the like by means of spotwelding or the like.

In the front structure 100 for an electric vehicle, the suspension frame 50 is also used as a frame supporting the driving unit M. Suspension arms 70 of the front suspension is swingably attached to the suspension frame 50. Furthermore, a plurality of motor mounts 80 (81,81, 82) supporting the driving unit M are attached to the suspension frame 50. Note that the structures and the like of the suspension frame 50, the suspension arms 70, and the motor mounts 80 will be described later.

Each of the pair of front side members 60 and 60 is a highly rigid member forming a part of a structural member of the vehicle body (vehicle body framework) in the vehicle front portion. That is, the suspension frame 50 is supported by the front side members 60 each forming a part of the structural member on the vehicle body side. The pair of front side members 60 and 60 extend in the vehicle front-rear direction above the suspension frame 50, and are spaced apart from each other in the vehicle width direction. Each front side member 60 is formed, as one member, by, for example, joining a plurality of steel-sheet members subjected to press working or the like by means of spotwelding or the like.

Each front side member 60 extends from an outer portion of a lower portion of the dash panel 1 in the vehicle width direction toward a front bumper (not shown). A portion of each front side member 60 on the dash panel 1 side is joined to the lower portion of the dash panel 1 by means of spotwelding or the like. Furthermore, the portion of each front side member 60 on the dash panel 1 side is joined, by means of spotwelding or the like, to an outer portion of the front cross member (not shown) in the vehicle width direction, the front cross member extending in the vehicle width direction along the lower portion of the dash panel 1.

In the example shown, each front side member 60 has a rear curved portion 61 and a main body portion 62. The rear curved portion 61 is a portion forming a rearmost portion of the front side member 60, has a predetermined length in the vehicle up-down direction, and is curved inwardly in the vehicle width direction toward the front side from the rear side. The front portion of the rear curved portion 61 is inclined upwardly to be away from the suspension frame 50 toward the front side from the rear side. A rear end of the rear curved portion 61 is joined to, for example, an inner surface of a side sill (not shown) in the vehicle width direction. The main body portion 62 is a portion forming most of the front side member 60 except for the rear portion thereof (that is, a major portion including a front portion and a center portion in the vehicle front-rear direction). The main body portion 62 is joined to a front end portion of the rear curved portion 61, and is continuous with the front end portion of the rear curved portion 61 to extend toward the vehicle front side. The main body portion 62 has a closed cross-sectional structure formed in a substantially rectangular shape (in other words, a rectangular cylindrical shape) in sectional view perpendicular to a longitudinal direction (vehicle front-rear direction) of the main body portion 62. A portion on the front side of a substantially center portion of the main body portion 62 in the vehicle front-rear direction extends linearly, and a portion on the rear side of the center portion of the main body portion 62 is inclined to approach the suspension frame 50 toward the rear side. That is, the front side member 60 is inclined upwardly from the rear side (side sill side) toward the front side (front bumper side) in side view (see Figure 2) as viewed from one side in the vehicle width direction, and extends linearly from the vicinity of the substantially center portion of the main body portion 62 toward the front side.

In the example shown, a front end portion of one front side member 60 and a front end portion of the other front side member 60 are connected to each other via a bumper member 2, and the front end portion of each front side member 60 is supported by a corresponding radiator support brace 3 from below. Note that in Figures 3 and 4, the bumper member 2, the radiator support braces 3, and a radiator lower cross frame 4, which will be described later, are not shown, and furthermore, in Figure 4, the front side members 60 are not shown as described above.

The bumper member 2 is a member supporting the front bumper (not shown) from a rear surface side, and extends in the vehicle width direction along the rear surface of the front bumper. The radiator support brace 3 is a brace that receives a load of a radiator (not shown) (portion including an evaporator in an air conditioning refrigerant circuit), and is a member supporting the front end portion of the front side member 60. The radiator support brace 3 is welded to the front end portion of the front side member 60, and extends to protrude toward the vehicle lower side with respect to a lower surface of the front side member 60. In the example shown, outer portions of the bumper member 2 in the vehicle width direction are fastened to the radiator support braces 3 by fastening members (not shown) such as bolts, so that the front end portions of the left and right front side members 60 are connected to each other via the bumper member 2.

In the example shown, the radiator support brace 3 is disposed on an upper surface of a front end portion of a side frame 10, which will be described later, of the suspension frame 50, and is supported by the suspension frame 50 (side frame 10) from below. The radiator support brace 3 connects the front end portion of the front side member 60 and the front end portion of the side frame 10.

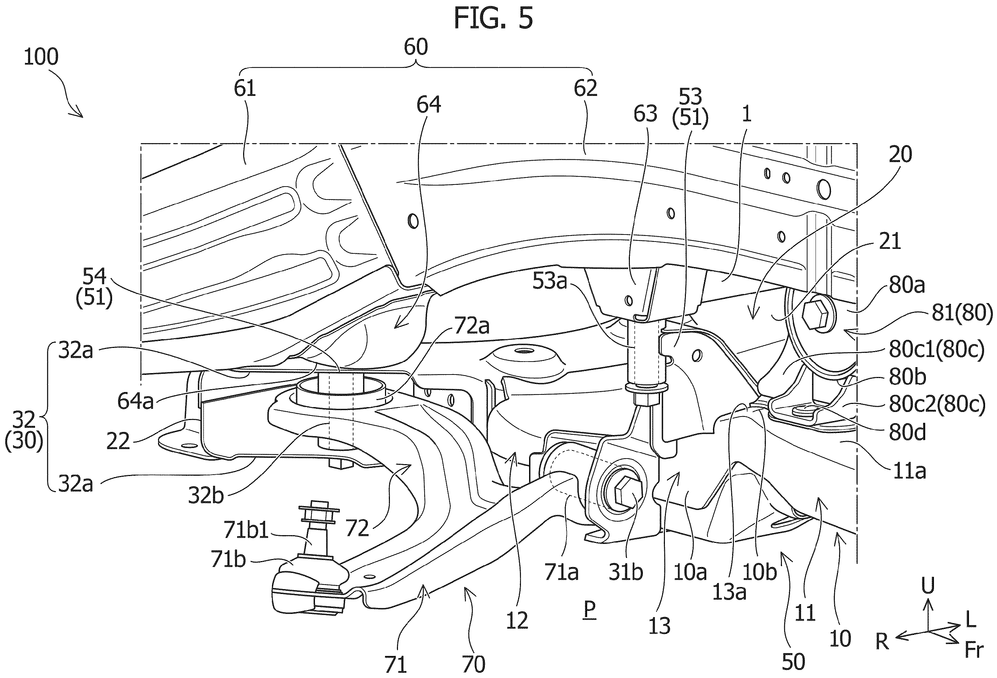

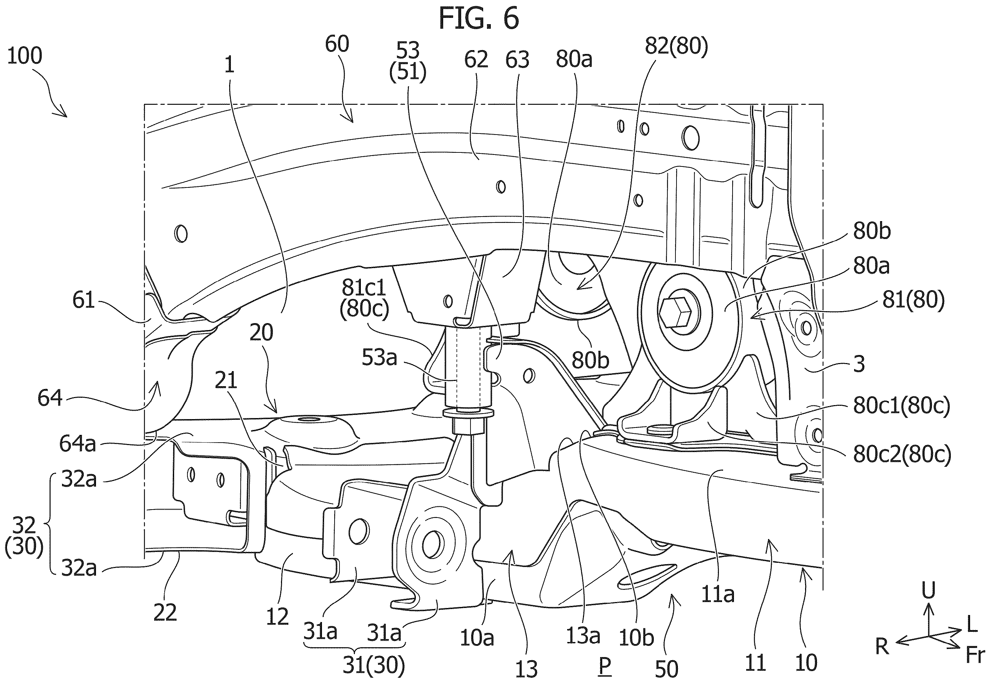

Next, the structures and the like of the suspension frame 50, the suspension arms 70, and the motor mounts 80 will be described with reference to Figures 1 to 6. Figure 5 is an enlarged perspective view of a main portion of the front structure 100 for an electric vehicle, and Figure 6 is an enlarged perspective view of a main portion of the front structure 100 for an electric vehicle in which the suspension arms 70 are not shown.

The suspension frame 50 has a pair of side frames 10 and 10, a frame main body 20, and arm holding portions 30.

The pair of side frames 10 and 10 extend in the vehicle front-rear direction at a lower portion in the vehicle front portion, and are spaced apart from each other in the vehicle width direction. Each side frame 10 is formed, as one member, by, for example, joining a plurality of steel-sheet members subjected to press working or the like by means of spotwelding or the like. Each side frame 10 has a closed cross-sectional structure formed in a substantially rectangular shape (in other words, a rectangular cylindrical shape) in sectional view perpendicular to a longitudinal direction (vehicle front-rear direction) of the side frame 10.

Each side frame 10 is disposed below the corresponding front side member 60. Each side frame 10 extends substantially forward toward the front bumper (not shown) from a position below a rear portion of the corresponding front side member 60. A front end position of each side frame 10 is aligned with a front end position of the corresponding front side member 60.

Each of the pair of side frames 10 and 10 has a front frame portion 11, a rear frame portion 12, and an inclined frame portion 13. The front frame portion 11 extends linearly in the vehicle front-rear direction. The rear frame portion 12 is located on the vehicle rear side and on the vehicle lower side of the front frame portion 11, and extends linearly in the vehicle front-rear direction. The inclined frame portion 13 connects the rear end of the front frame portion 11 and the front end of the rear frame portion 12, and is inclined to approach the front side member 60 from the rear frame portion 12 side toward the front frame portion 11 side. In other words, the side frame 10 is bent in a crank shape at an intermediate portion of the side frame 10 in the longitudinal direction so that the front portion (front frame portion 11) of the side frame 10 is located on the upper side with respect to the rear portion (rear frame portion 12) of the side frame 10.

The frame main body 20 extends in the vehicle width direction to connect rear portions of the pair of side frames 10 and 10. The frame main body 20 is formed, as one member, by, for example, joining two upper and lower steel-sheet members subjected to press working or the like by means of spotwelding or the like. The frame main body 20 has a closed cross-sectional structure formed in a substantially rectangular shape (in other words, a rectangular cylindrical shape) in sectional view perpendicular to a longitudinal direction (vehicle width direction) of the frame main body 20. A rear end portion of each side frame 10 is joined to a corresponding outer portion of a front wall 21 in the vehicle width direction by means of spotwelding or the like, the front wall 21 facing the vehicle front side of the frame main body 20.

Each end portion of the frame main body 20 in the vehicle width direction forms a protruding portion 22 protruding outwardly in the vehicle width direction with respect to the rear end of the corresponding side frame 10 (rear frame portion 12). That is, the protruding portion 22 is a portion protruding (projecting) and extending outwardly in the vehicle width direction with respect to a joining portion to which the rear end of the side frame 10 (rear frame portion 12) is joined in the frame main body 20. The protruding portion 22 can be also referred to as a projecting portion or an extending portion. An outer end portion of the protruding portion 22 in the vehicle width direction is open toward an outer side in the vehicle width direction.

The arm holding portion 30 is a portion swingably holding the suspension arm 70. In the example shown, the arm holding portion 30 includes a front arm holding portion 31 and a rear arm holding portion 32.

The front arm holding portion 31 is provided at a portion closer to the center and on the rear side (in the example shown, a portion on the rear side of the inclined frame portion 13) of the side frame 10 in the vehicle front-rear direction, and the rear arm holding portion 32 is provided at an end portion (that is, the protruding portion 22) of the frame main body 20 in the vehicle width direction.

Here, with reference to Figures 1, 3, and 5, although not particularly limited, the suspension arm 70 has a front arm portion 71 connected to the front arm holding portion 31 and a rear arm portion 72 connected to the rear arm holding portion 32. The front arm portion 71 has an inner end portion swingably connected to the front arm holding portion 31, and an outer end portion swingably connected to a knuckle of the front wheel (not shown). The front arm portion 71 extends substantially in the vehicle width direction and connects the suspension frame 50 and the front wheel. The rear arm portion 72 extends substantially rearwardly from an intermediate portion of the front arm portion 71 toward the rear arm holding portion 32. The rear arm portion 72 has a rear end portion swingably connected to the rear arm holding portion 32. The rear arm portion 72 is curved (inclined) to approach an outer surface 10a of the side frame 10 in the vehicle width direction from the front arm portion 71 side toward the rear side.

In the example shown, the front arm holding portion 31 of the arm holding portion 30 has a pair of front holding plates 31a and 31a joined to a portion on the rear side (in the example shown, a portion on the rear side of the inclined frame portion 13) in the outer surface 10a of the side frame 10. The pair of front holding plates 31a and 31a are spaced apart from each other in the vehicle front-rear direction, and protrude toward the outer side in the vehicle width direction from the outer surface 10a of the side frame 10. A rubber front bush 71a (see Figure 5) formed in a substantially cylindrical shape and extending in the vehicle front-rear direction is held in an inner end portion of the front arm portion 71. The inner end portion of the front arm portion 71 is fitted between the pair of front holding plates 31a and 31a. In this state, a front arm swing shaft portion 31b extending in the vehicle front-rear direction is inserted into the front bush 71a in the inner end portion of the front arm portion 71, and is attached to the pair of front holding plates 31a and 31a, so that the front arm portion 71 is supported by the front arm holding portion 31. Thus, the front arm portion 71 is held by the front arm holding portion 31 to be swingable in the up-down direction around the front arm swing shaft portion 31b as a swing center, and is connected to the side frame 10 of the suspension frame 50 via the front arm holding portion 31. A knuckle-side ball joint 71b is attached to an outer end portion of the front arm portion 71. A joint shaft portion 71b1 protruding upwardly from the knuckle-side ball joint 71b is fastened to the knuckle, so that the side frame 10 and the front wheel are connected via the front arm portion 71.

The rear arm holding portion 32 of the arm holding portion 30 is provided in the protruding portion 22 of the frame main body 20. The rear arm holding portion 32 has a pair of upper and lower rear holding plates 32a and 32a formed by a part of the protruding portion 22. The pair of rear holding plates 32a and 32a are spaced apart from each other in the vehicle up-down direction, the upper rear holding plate 32a is an upper wall of the protruding portion 22, and the lower rear holding plate 32a is a lower wall of the protruding portion 22. A rear bush 72a formed of, for example, a ball bush is held at a rear end portion of the rear arm portion 72. The rear end portion of the rear arm portion 72 is fitted between the pair of rear holding plates 32a and 32a through an opening of the protruding portion 22. In this state, a rear arm swing shaft portion 32b extending in the up-down direction is inserted into the rear bush 72a formed by the ball bush at the rear end portion of the rear arm portion 72, and is attached to the pair of rear holding plates 32a while passing through the pair of rear holding plates 32a, so that the rear end portion of the rear arm portion 72 is supported by the rear arm holding portion 32. Thus, the rear end portion of the rear arm portion 72 is swingably held by the rear arm holding portion 32, and is connected to the frame main body 20 of the suspension frame 50 via the rear arm holding portion 32.

The suspension frame 50 is supported by the front side members 60 which are structural members on the vehicle body side as described above. In the present embodiment, a plurality of connection portions 51 which are portions to be connected to the front side members 60 are provided to the suspension frame 50.

In the present embodiment, the connection portions 51 to each of the pair of front side members 60 and 60 are each provided at the front portion and the intermediate portion of the corresponding side frame 10 of the pair of side frames 10 and 10 of the suspension frame 50 in the vehicle front-rear direction, and at a corresponding end portion of the frame main body 20 of the suspension frame 50 in the vehicle width direction. That is, the plurality of connection portions 51 includes a front connection portion 52, an intermediate connection portion 53, and a rear connection portion 54.

In the present embodiment, the front connection portion 52 is provided at the front portion of each of the pair of side frames 10 and 10 in the vehicle front-rear direction. The intermediate connection portion 53 is provided at the intermediate portion of each of the pair of side frames 10 and 10 in the vehicle front-rear direction. The rear connection portion 54 is provided at the end portion of the frame main body 20 in the vehicle width direction. For example, each connection portion 51 (52, 53, 54) is set as a fastening point (fastening portion) to the corresponding front side member 60 in the suspension frame 50 via a bolt (52a, 53a, 54a).

In particular, in the example shown, the front connection portion 52 is set in the vicinity of the front end of the side frame 10 (front frame portion 11). A lower end portion of the radiator support brace 3 joined to the front end portion of the front side member 60 is mounted on an upper surface of a portion including this front connection portion 52. The front portion of the side frame 10 is fastened to the lower end portion of the radiator support brace 3 via the bolt 52a passing through the side frame 10 in the front connection portion 52. Thus, the front portion of the side frame 10 is connected to the front side member 60 which is a structural member on the vehicle body side via the bolt 52a and the radiator support brace 3 in the front connection portion 52, and is fixed to a front portion of the front side member 60.

In the present embodiment, the intermediate connection portion 53 is provided at a portion on the front end side in an upper surface 13a of the inclined frame portion 13. That is, the plurality of connection portions 51 have the intermediate connection portion 53 provided at the portion on the front end side in the upper surface 13a of the inclined frame portion 13 in each of the pair of side frames 10 and 10. In a relationship with the intermediate connection portion 53, the front arm holding portion 31 is joined to the outer surface 10a and the like on the rear side of the intermediate connection portion 53 in the inclined frame portion 13.

In particular, the intermediate connection portion 53 is a metallic member welded to the inclined frame portion 13 of the side frame 10. The intermediate connection portion 53 extends in the vehicle upward direction and projects upwardly with respect to an upper surface of the side frame 10. An attachment bracket 63 is joined to a portion corresponding to the intermediate connection portion 53 in the lower surface of the front side member 60 by means of spotwelding or the like. The attachment bracket 63 is formed by a steel-sheet member subjected to press working or the like, and is formed in a box shape which is open upwardly. An upper portion of the intermediate connection portion 53 is fastened to a lower portion of the attachment bracket 63 via the bolt 53a. That is, the intermediate portion of the side frame 10 is fastened to the lower portion of the attachment bracket 63 via the bolt 53a in the intermediate connection portion 53. Thus, the intermediate portion of the side frame 10 is connected to the front side member 60 which is a structural member on the vehicle body side via the bolt 53a and the attachment bracket 63 in the intermediate connection portion 53, and is fixed to an intermediate portion of the front side member 60.

In the example shown, the rear connection portion 54 is set to the protruding portion 22 of the frame main body 20. In other words, the rear connection portion 54 is set to the same portion as the rear arm holding portion 32. A bottom portion of a bulging plate 64 is mounted on an upper surface of a portion including this rear connection portion 54 (that is, an upper surface of the upper rear holding plate 32a). The bulging plate 64 is formed of a steel plate bulging in the vehicle downward direction, and is joined to a lower surface of the rear portion (rear curved portion 61) of the front side member 60. A lower surface of the front portion of the rear curved portion 61 is inclined in the vehicle upward direction toward the vehicle front side. An upper portion of the bulging plate 64 is inclined along the lower surface of the rear curved portion 61. A flange is formed on a peripheral edge of the upper portion of the bulging plate 64, and the flange is joined to the lower surface of the rear curved portion 61 by means of spotwelding or the like. A flat seat 64a contacting the upper surface of the protruding portion 22 is formed in the bottom portion of the bulging plate 64. In the rear connection portion 54, an end portion (protruding portion 22) of the frame main body 20 in the vehicle width direction is fastened to the bottom portion of the bulging plate 64 via the bolt 54a passing through the protruding portion 22 of the frame main body 20 and the bottom portion of the bulging plate 64. Thus, the end portion of the frame main body 20 in the vehicle width direction is connected to the front side member 60 which is a structural member on the vehicle body side via the bolt 54a and the bulging plate 64 in the rear connection portion 54, and is fixed to a rear portion of the front side member 60.

In the example shown, the rear connection portion 54 also functions as the rear arm holding portion 32. The bolt 54a for connecting the rear connection portion 54 to the front side member 60 also functions as the rear arm swing shaft portion 32b of the rear arm holding portion 32.

The suspension frame 50 is detachably attached to the front side member 60 via the bolt (52a, 53a, 54a) in each of the front connection portion 52, the intermediate connection portion 53, and the rear connection portion 54. Note that, in the example shown, the left-side front connection portion 52 and the right-side front connection portion 52 are connected via the radiator lower cross frame 4. The radiator lower cross frame 4 extends in the vehicle width direction below the bumper member 2 and the suspension frame 50. The end portion of the radiator lower cross frame 4 in the vehicle width direction is detachably attached to the front connection portion 52 via the bolt 52a in a state of contacting the lower surface of the front connection portion 52 of the side frame 10 of the suspension frame 50.

In the front structure 100, a plurality of motor mounts 80 have a side motor mount 81 disposed for each of the pair of side frames 10 and 10. That is, the plurality of motor mounts 80 have two side motor mounts 81 and 81.

In the present embodiment, the plurality of motor mounts 80 include the two side motor mounts 81 and 81, and a rear motor mount 82 disposed in the frame main body 20. Each motor mount 80 (81, 81, 82) is mainly formed by a metallic member and a rubber member. Each motor mount 80 is attached (fixed) on the suspension frame 50, and is supported by the suspension frame 50 from below. The majority of each motor mount 80 is formed by a metallic solid member, and has a relatively high rigidity.

The side motor mount 81 is fixed on the front frame portion 11 of the side frame 10 of the suspension frame 50. As described above, the side frame 10 is bent in a crank shape at an intermediate portion of the side frame 10 in the longitudinal direction so that the front frame portion 11 is located on the upper side with respect to the rear frame portion 12. Accordingly, the side motor mount 81 is fixed to a portion on the front side in the side frame 10 and a portion at a position where a height from the ground surface is high (in the example shown, the highest portion), and protrudes upwardly.

In the present embodiment, the side motor mount 81 is fixed to a portion on the rear end side in the upper surface 11a of the front frame portion 11. That is, the side motor mount 81 is fixed to the upper surface 11a of the front frame portion 11 at a position closer to a front bent portion 10b which is a connection portion (boundary portion) between the front frame portion 11 and the inclined frame portion 13.

In particular, as described above, the intermediate connection portion 53 is provided at a portion on the front end side in the upper surface 13a of the inclined frame portion 13 of the side frame 10. That is, the intermediate connection portion 53 is provided in the upper surface 13a of the inclined frame portion 13 at a position closer to the front bent portion 10b. Accordingly, the side motor mount 81 and the intermediate connection portion 53 are arranged to be adjacent to each other around the front bent portion 10b. That is, the side motor mount 81 is disposed in the vicinity of the intermediate connection portion 53.

The rear motor mount 82 is fixed to a center portion of the rear end portion in the suspension frame 50 in the vehicle width direction, that is, to an upper surface of a center portion of the frame main body 20 in the vehicle width direction.

In the example shown, a front portion of a right-side portion of the driving unit M is supported by the right-side side motor mount 81, the front portion of a left-side portion of the driving unit M is supported by the left-side side motor mount 81, and a rear portion of the driving unit M is supported by the rear motor mount 82. Thus, the plurality of motor mounts 80 are arranged to surround the driving unit M. The driving unit M is supported by the suspension frame 50 in a state of being supported at three points by the three motor mounts 80 (81, 81, and 82) fixed to the upper surface of the suspension frame 50.

The driving unit M has drive shaft portions M1 that transmit a driving force to the front wheels. The drive shaft portions M1 extend outwardly in the vehicle width direction from respective left and right side portions. With reference to Figure 2, the drive shaft portion M1 is provided to pass through between the side frame 10 and the front side member 60. In particular, the drive shaft portion M1 is located between the rear portion of the side frame 10 and the front side member 60 in side view as viewed in the vehicle width direction. In particular, the drive shaft portion M1 extends in the vehicle width direction at a position right above the front arm holding portion 31 in the example shown.

In particular, a bush 80a supporting a metallic mounting mount shaft portion M2 extending from the driving unit M side is attached to each motor mount 80 (81, 81, 82), and each motor mount 80 supports the driving unit M by supporting the mount shaft portion M2 by the bush 80a.

In particular, each motor mount 80 has a mount main body portion 80b holding the bush 80a, and a leg portion 80c fixed to the upper surface of the suspension frame 50.

The mount main body portion 80b forms an upper portion of the motor mount 80. The mount main body portion 80b is formed with a through hole passing therethrough in the vehicle width direction, and the rubber bush 80a formed in a cylindrical shape is fitted into this through hole. The metallic mount shaft portion M2 extending from the driving unit M side is inserted into the bush 80a. The motor mount 80 supports the driving unit M by supporting the mount shaft portion M2 by the bush 80a.

The leg portion 80c extends rearwardly from a lower portion of the mount main body portion 80b. In the example shown, the leg portion 80c has a pair of outer leg portions 80c1 and 80c1 spaced apart from each other, and an intermediate leg portion 80c2. The pair of outer leg portions 80c1 and 80c1 are spaced apart from each other in a direction perpendicular to the extending direction of the mount shaft portion M2. The intermediate leg portion 80c2 is located between the pair of outer leg portions 80c1 and 80c1 in the direction perpendicular to the extending direction of the mount shaft portion M2, and projects toward the side opposite to the driving unit M side in the leg portion 80c in the extending direction of the mount shaft portion M2.

In each of the right side portion and the left side portion of the driving unit M, the mount shaft portions M2 extend in the vehicle width direction, and in the rear portion of the driving unit M, the mount shaft portion M2 extends in the vehicle front-rear direction. The side motor mount 81 is disposed on the upper surface of the side frame 10 in a state in which the pair of outer leg portions 80c1 and 80c1 are spaced apart from each other in the vehicle front-rear direction and the intermediate leg portion 80c2 is directed to the side opposite to the driving unit M. The rear motor mount 82 is disposed on the upper surface of the frame main body 20 in a state in which the pair of outer leg portions 80c1 and 80c1 are spaced apart from each other in the vehicle width direction and the intermediate leg portion 80c2 is directed to the side opposite to the driving unit M. Each motor mount 80 (81, 81, 82) is fixed to the suspension frame 50 by, for example, fastening each of the pair of outer leg portions 80c1 and 80c1 and the intermediate leg portion 80c2 to the suspension frame 50 by a bolt 80d.

In the present embodiment, the leg portion 80c of the side motor mount 81 is fixed to the upper surface 11a of the front frame portion 11 in the side frame 10. That is, the side motor mount 81 has the leg portion 80c fixed to the upper surface 11a of the front frame portion 11.

In the present embodiment, a rear end portion of the leg portion 80c of the side motor mount 81 is located on a rear end portion of the upper surface 11a of the front frame portion 11. That is, a rear end of the leg portion 80c of the side motor mount 81 is located on the front bent portion 10b. Accordingly, a rear end of the outer leg portion 80c1 on the rear side of the side motor mount 81 and a front end of a lower portion of the intermediate connection portion 53 are in proximity to each other around the front bent portion 10b.

In the front structure 100 for an electric vehicle configured as described above, each side frame 10 of the suspension frame 50 has the front frame portion 11 that extends linearly in the vehicle front-rear direction, the rear frame portion 12 that is located on a vehicle rear side and a vehicle lower side with respect to the front frame portion 11 and extends linearly in the vehicle front-rear direction, and the inclined frame portion 13 that connects the rear end of the front frame portion 11 and the front end of the rear frame portion 12. That is, the side frame 10 is bent in a crank shape at the intermediate portion of the side frame 10 in the longitudinal direction so that the front frame portion 11 is located on the upper side with respect to the rear frame portion 12. Accordingly, a rigidity against a load in the up-down direction of the intermediate portion of the side frame 10 in the vehicle front-rear direction is increased by a crank-shaped bent structure. As a result, even when the load of the driving unit M which is an heavy object acts on the side frame 10 via the side motor mount 81, an amount of flexure (for example, displacement in the up-down direction) of the intermediate portion of the side frame 10 can be reduced, and the generation of vibration caused by the driving unit M in the suspension frame 50 and the like can be reduced.

In addition, in the front structure 100, the side motor mount 81 is fixed on the front frame portion 11, which makes it possible to relatively reduce the overall height of the side motor mount 81 (in particular, a length of the leg portion 80c in the up-down direction) and achieve an advantageous effect on the vibration. In particular, from the perspective of a center-of-gravity position of the vehicle front portion, and the like, a height position of the center of gravity of the driving unit M which is a heavy object from the traveling surface may be determined to a predetermined height position, and in this case, the mount shaft portion M2 (support point) of the driving unit M also has a restriction on the height position, and the height positions of the driving unit M and the bush 80a of the side motor mount 81 are also determined to predetermined height positions. In a case of such a restriction, the height position of the front frame portion 11 on which the side motor mount 81 is disposed is set to be higher than the height position of the rear frame portion 12, which makes it to relatively reduce the overall height of the side motor mount 81 (in particular, a length of the leg portion 80c in the up-down direction). In particular, a length (distance) in the up-down direction between the support point (mount shaft portion M2) of the driving unit M by the side motor mount 81 and a fixed surface (lower surface of the leg portion 80c) of the side motor mount 81 to the suspension frame 50 can be relatively reduced. As a result, it is possible to reduce the manufacturing cost by reducing the size of the side motor mount 81, to reduce the weight of the side motor mount 81, to increase the rigidity of the side motor mount 81 itself, and to reduce the vibration of the side motor mount 81 itself, achieving advantageous effect of reducing the vibration.

As described above, the front structure 100 for an electric vehicle according to the present embodiment has a structure that can reduce the vibration caused by the driving unit M in the vehicle front portion of the electric vehicle.

In the present embodiment, the intermediate connection portion 53 is provided in a portion on the front end side in the upper surface 13a of the inclined frame portion 13 of the side frame 10, so that the rigidity around the front bent portion 10b which is a connection portion (boundary portion) between the front frame portion 11 and the inclined frame portion 13 can be increased. The side motor mount 81 is fixed to the portion on the rear end side in the upper surface 11a of the front frame portion 11 of the side frame 10, that is, to around the front bent portion 10b. As a result, the support rigidity with respect to the side motor mount 81 can be increased effectively. Accordingly, the vibration caused by the driving unit M can be reduced more effectively.

In the present embodiment, the rear end portion of the leg portion 80c of the side motor mount 81 is located on the rear end portion of the upper surface 11a of the front frame portion 11. As a result, the support rigidity with respect to the side motor mount 81 can be increased more effectively. Accordingly, the vibration caused by the driving unit M can be reduced more reliably.

In the present embodiment, in the front structure 100, the driving unit M is surrounded by the two side motor mounts 81 disposed in the side frames 10 and the rear motor mount 82 disposed on the frame main body 20 so that the driving unit M can be supported by three points, making it possible to efficiently achieve stable support of the driving portion M. In particular, as in the present embodiment, the side frame 10 is bent so that the front frame portion 11 of the side frame 10 approaches the front side member 60, so that the stable support of the driving unit M can be achieved more efficiently with a mixture of size reduction and weight reduction of the side motor mount 81.

In the present embodiment, in the front structure 100, the front side members 60 extend in the vehicle front-rear direction on the upper side of the respective side frames 10 of the suspension frame 50, and the connection portions 51 to each of the front side members 60 are each provided at the front portion and the intermediate portion of the corresponding side frame 10 in the vehicle front-rear direction, and at the corresponding end portion of the frame main body 20 in the vehicle width direction. That is, the connection points (fixed points) of each outer portion of the suspension frame 50 in the vehicle width direction to the vehicle body (front side member 60) are provided not only at the vicinity of both end portions in the vehicle front-rear direction but also at the intermediate portion in the vehicle front-rear direction which easily causes flexure. Accordingly, as compared to the conventional structure in which the fixed points of each outer portion of the suspension frame in the vehicle width direction to the vehicle body are set only at the vicinity of both end portions in the vehicle front-rear direction, the front structure 100 makes it possible to improve the support rigidity of the suspension frame 50 and to reduce an amount of flexure (for example, displacement in the up-down direction) of the intermediate portion of the side frame 10 due to a load of the driving unit M which is a heavy object. The strong frame structure supporting the side motor mount 81 is formed by the front side member 60, the outer portion of the suspension frame 50 in the vehicle width direction, and the three connection portions 51 (52, 53, and 54). This frame structure makes it possible to effectively reduce the occurrence of the torsional deformation in the vehicle width direction, and the like, the flexural deformation in the vehicle up-down direction, and the like.

In the front structure 100, in addition to the front and rear connection portions (52, 54), the intermediate connection portion 53 is disposed, which also makes it possible to improve the absorption performance of impact energy when the impact energy acts on the vehicle front portion from the vehicle front side. In particular, when the intermediate connection portion 53 is provided, the deformation of the front side member 60 in the up-down direction is reduced at the time of collision, and the front side member 60 receives the impact energy in the vehicle front-rear direction, for example, the main body portion 62 of the front side member 60 collapses substantially in the front-rear direction, making it possible to effectively absorb the impact energy.

The description of the present embodiment is an example for describing the present invention and is not intended to limit the invention as claimed in the claims. Furthermore, the configurations of the respective portions of the present invention are not limited to those of the above embodiment, and various alterations can be made within the technical scope as claimed in the claims.

For example, in a case in which the vibration can be sufficiently reduced by reducing the bent shape of the side frame 10 and the overall height of the side motor mount 81, the side motor mount 81 may be disposed at any position on the upper surface 11a of the front frame portion 11, and the intermediate connection portion 53 may be disposed at any position on the upper surface 13a of the inclined frame portion 13. In the same manner, in a case in which the vibration can be sufficiently reduced by reducing the bent shape of the side frame 10 and the overall height of the side motor mount 81, it is unnecessary to provide the intermediate connection portion 53. It is only required that the plurality of motor mounts 80 have at least two side motor mounts 81 and 81.

### [Reference Signs List]

- 1: Dash panel
- 2: Bumper member
- 3: Radiator support brace
- 4: Radiator lower cross frame
- 10: Side frame
- 10a: Outer surface
- 10b: Front bent portion
- 11: Front frame portion
- 11a: Upper surface
- 12: Rear frame portion
- 13: Inclined frame portion
- 13a: Upper surface
- 20: Frame main body
- 21: Front wall
- 22: Protruding portion
- 30: Arm holding portion
- 31: Front arm holding portion
- 31a: Front holding plate
- 31b: Front arm swing shaft portion
- 32: Rear arm holding portion
- 32a: Rear holding plate
- 32b: Rear arm swing shaft portion
- 50: Suspension frame
- 51: Connection portion
- 52: Front connection portion
- 52a: Bolt
- 53: Intermediate connection portion
- 53a: Bolt
- 54: Rear connection portion
- 54a: Bolt
- 60: Front side member
- 61: Rear curved portion
- 62: Main body portion
- 63: Attachment bracket
- 64: Bulging plate
- 64a: Seat
- 70: Suspension arm
- 71: Front arm portion
- 71a: Front bush
- 71b: Knuckle-side ball joint
- 71b1: Joint shaft portion
- 72: Rear arm portion
- 72a: Rear bush
- 80: Motor mount
- 80a: Bush
- 80b: Mount main body portion
- 80c: Leg portion
- 80c1: Outer leg portion
- 80c2: Intermediate leg portion
- 80d: Bolt
- 81: Side motor mount
- 82: Rear motor mount
- 100: Front structure for electric vehicle
- M: Driving unit
- M1: Drive shaft portion
- M2: Mount shaft portion
- P: Power compartment

## Claims

1. A front structure for an electric vehicle, comprising:
a suspension frame that has: a pair of side frames that extend in a vehicle front-rear direction in a lower portion of a vehicle front portion and are spaced apart from each other in a vehicle width direction; a frame main body that extends in the vehicle width direction to connect rear portions of the pair of side frames; and an arm holding portion that swingably holds a suspension arm, in which a plurality of motor mounts supporting a driving unit having a traveling motor are attached to the suspension frame, **characterized in that**
each of the pair of side frames has a front frame portion that extends linearly in the vehicle front-rear direction, a rear frame portion that is located on a vehicle rear side and a vehicle lower side with respect to the front frame portion and extends linearly in the vehicle front-rear direction, and an inclined frame portion that connects a rear end of the front frame portion and a front end of the rear frame portion,
the plurality of motor mounts have a side motor mount disposed for each of the pair of side frames, and
the side motor mount is fixed on the front frame portion.

2. The front structure for an electric vehicle according to claim 1, further comprising:
a pair of front side members that extend in the vehicle front-rear direction on an upper side of the suspension frame and are spaced apart from each other in the vehicle width direction, wherein
a plurality of connection portions which are portions to be connected to the front side members are provided to the suspension frame,
the plurality of connection portions have an intermediate connection portion provided at a portion on a front end side in an upper surface of the inclined frame portion in each of the pair of side frames, and
the side motor mount is fixed to a portion on a rear end side in an upper surface of the front frame portion.

3. The front structure for an electric vehicle according to claim 2, wherein
the side motor mount has a leg portion fixed to the upper surface of the front frame portion, and
a rear end portion of the leg portion is located on a rear end portion of the upper surface of the front frame portion.

4. The front structure for an electric vehicle according to any one of claims 1 to 3, wherein
the plurality of motor mounts include the two side motor mounts and a rear motor mount fixed to the frame main body.
